# EUROPEAN PATENT APPLICATION

(11) **EP 4 024 331 A1**
(43) Date of publication of application: **06.07.2022**
(21) Application number: 20217959.4
(22) Date of filing: 31.12.2020
(51) Int. Cl.: G06T 7/00, G06T 7/11

(54) **PERIPHERAL PERFUSION**

(71) Applicant: Koninklijke Philips N.V., 5656 AG Eindhoven (NL)
(72) Inventor: WISSEL, Tobias, 5656 AE Eindhoven (NL); NICKISCH, Hannes, 5656 AE Eindhoven (NL); SABCZYNSKI, Jörg, 5656 AE Eindhoven (NL); GRASS, Michael, 5656 AE Eindhoven (NL)
(74) Representative: Philips Intellectual Property & Standards

(57) **Abstract**

The present invention relates to peripheral perfusion time density curves. In order to provide more detailed information, a sequence of perfusion angiographic X-ray images of a region of interest of a subject's body is provided (202). A mask for non-body related background in the sequence of X-ray images is generated (204) and the non-body related background is masked-out (206) to achieve body related perfusion angiographic X-ray images. Further, vessels are segmented (208) and a segmentation mask is generated (210) based on the segmented vessels. A macrovascular-related time density curve is extracted (212) for image areas with segmented vessels based on the segmentation mask. Further, a microvascular-related time density curve is extracted (214) for non-segmented-vessel image areas of the body related perfusion angiographic X-ray images based on the segmentation mask. Following, the macrovascular-related time density curve and the microvascular-related time density curve are provided (216), thus giving information for both kinds of perfusion in a separate way. As an advantage, the distinctive properties stemming from micro- or macrovascular perfusion are extracted and visualized. The respective information can thus be used separately, instead of being averaged out when not separated. Further, advantageously, different characteristics for both root causes may entail different treatment decisions and clinical endpoints.

## Description

### FIELD OF THE INVENTION

The present invention relates to a device for peripheral perfusion time density curves, a system for peripheral perfusion imaging and a method for peripheral perfusion time density curves.

### BACKGROUND OF THE INVENTION

In the context of vascular treatment, blood flow knowledge, for example, may act as a basic source of information. As an example, perfusion angiography has developed into a promising tool for confirming the success of endovascular treatment in peripheral artery disease. In addition to the visualization of major vessel contrast flow in digital subtraction angiography (DSA) of e.g. the foot, perfusion angiography aims at capturing richer perfusion information. This may be approached by spatially summing image intensities in areas that cover the imaged foot anatomy. This sum - observed over time - gives rise to a time-density curve, which describes perfusion characteristics in this area. However, it has been shown that more detailed knowledge about actual perfusion characteristics would be beneficial in e.g. diagnosis and treatment.

### SUMMARY OF THE INVENTION

There may thus be a need for providing more detailed peripheral perfusion related information.

The object of the present invention is solved by the subject-matter of the independent claims; further embodiments are incorporated in the dependent claims. It should be noted that the following described aspects of the invention apply also for the device for peripheral perfusion time density curves, for the system for peripheral perfusion imaging and for the method for peripheral perfusion time density curve.

According to the present invention, a device for peripheral perfusion time density curves is provided. The device comprises an image data input, a data processor and an output interface. The image data input is configured to receive a sequence of perfusion angiographic X-ray images of a region of interest of a subject's body. The data processor is communicatively coupled to the input and output. The data processor is configured to generate a mask for non-body related background in the sequence of X-ray images and mask-out the non-body related background in the perfusion angiographic X-ray images to achieve body related perfusion angiographic X-ray images. The data processor is also configured to segment vessels in at least one of the body related perfusion angiographic X-ray images. The data processor is further configured to generate at least one segmentation mask based on the segmented vessels. The data processor is still further configured to extract at least one macrovascular-related time density curve for image areas with segmented vessels based on the at least one segmentation mask. The data processor is also configured to extract at least one microvascular-related time density curve for non-segmented-vessel image areas of the body related perfusion angiographic X-ray images based on the at least one segmentation mask. The output interface is configured to provide the at least one macrovascular-related time density curve and the at least one microvascular-related time density curve.

As an advantageous effect, the distinctive properties stemming from micro- or macrovascular perfusion are extracted and visualized. The respective information can thus be used separately, instead of being averaged out when not separated. Advantageously, different characteristics for both root causes may entail different treatment decisions and clinical endpoints. As an example, macrovascular problems may be treated by e.g. stenting or ballooning during endovascular treatment in the cathlab. As another example, microvascular problems as e.g. observed for diabetes or chronic limb impairment patients, may be treated by medication.

Thus, by separating the perfusion angiography data based on the masking procedure, it is possible to distinguish between macrovascular problems and microvascular problems. The masking prevents an averaging of image information across an area in the angiographic image, which includes both effects with unknown balance, i.e. contribution. The masking avoids that the relatively strong signal (and also signal to noise ratio) caused by the relatively massive flow of contrast in the major vessels overrides the flow on the microvascular level that appears in tissue area which may be by far larger than the major vessel area. Even though the tissue area is geometrically larger, the blushing effect of contrast flowing through the tissue/capillaries is significantly weaker and spatially heterogenous (e.g. bony versus non-bony areas). The latter also covers skin perfusion, which is directly related to the healing of wounds, ulcers or gangrenes.

In an example, a correction of the curves may be provided, e.g. they are corrected for hematocrit related correction factors (multiplicative, in an option). This is considering that capillaries, i.e. the micro part, contain less blood cells versus plasma where the contrast medium is present.

According to an example, the data processor is configured to align the perfusion angiographic X-ray images to compensate for subject motion before the segmentation.

According to an example, for the segmentation, the data processor comprises a neural network that is configured to analyze the body related perfusion angiographic X-ray images to identify macrovascular vessels. The neural network can be trained on existing data to allow a complex identification of vascular structures.

This also includes to avoid non-vessel areas with similar appearance, e.g. caused by motion and DSA masking with remaining misalignment between DSA background reference and current frame.

As an option, the neural network is also configured to segment the mask for non-body related background.

As another option, the data processor is configured to threshold the outcome of the analysis for the segmentation.

According to an example, for the segmentation, the data processor is configured to segment at least first vessels in at least one of the perfusion angiographic X-ray images based on a predetermined first vessel criteria and to segment at least second vessels in at least one of the perfusion angiographic X-ray images based on predetermined second vessel criteria. Further, for the mask generation, the data processor is configured to generate at least one first segmentation mask based on the segmented first vessels, and to generate at least one second segmentation mask based on the segmented second vessels. For the time-density curve extraction, the data processor is configured to extract a first macrovascular-related time density curve for masked image areas based on the at least one first segmentation mask, and to extract a second macrovascular-related time density curve for masked image areas based on the at least one second segmentation mask. For the provision of the time density curves, the data processor is configured to provide the first and the second macrovascular-related time density curve and the microvascular-related time density curve.

According to an example, the mask (or masks) is (are) provided as a non-binary mask (masks) such that the image areas with segmented vessels areas and non-segmented-vessel image areas of the body related perfusion angiographic X-ray images partially overlap in a predetermined manner.

According to an example, the data processor is configured to divide the region of interest of the subject's body into different local regions assigned to zones of an anatomical model. The image data input is configured to provide standard time density curves for comparison.

According to an example, a display is provided for displaying the macrovascular-related time density curve and the microvascular-related time density curve.

According to the present invention, also a system for peripheral perfusion imaging is provided. The system comprises an X-ray imaging device, a display device and a device for peripheral perfusion time density curves according to one of the preceding examples. The X-ray imaging device is configured to provide perfusion angiographic X-ray images of a region of interest of a subject's body. The display device is configured to display the macrovascular-related time density curve and the microvascular-related time density curve.

According to the present invention, also a method for peripheral perfusion time density curves is provided. The method comprises the following steps:
- receiving a sequence of perfusion angiographic X-ray images of a region of interest of a subject's body;
- generating a mask for non-body related background in the sequence of X-ray images and masking-out the non-body related background in the perfusion angiographic X-ray images to achieve body related perfusion angiographic X-ray images;
- segmenting vessels in at least one of the body related perfusion angiographic X-ray images;
- generating at least one segmentation mask based on the segmented vessels;
- extracting at least one macrovascular-related time density curve for image areas with segmented vessels based on the at least one segmentation mask, and extracting at least one microvascular-related time density curve for non-segmented-vessel image areas of the body related perfusion angiographic X-ray images based on the at least one segmentation mask;
- and providing the at least one macrovascular-related time density curve and the at least one microvascular-related time density curve.

According to an example, vessels are segmented in a plurality of the perfusion angiographic X-ray images. A segmentation mask sequence is generated based on the segmented vessels in the plurality of the perfusion angiographic X-ray images. For the extraction step, the macrovascular-related time density curve for masked image areas and the microvascular-related time density curve for non-masked image areas are extracted based on the segmentation mask sequence.

According to a further embodiment of the method, one mask is provided for each of the images of the sequence of perfusion angiographic X-ray images.

According to a further embodiment of the method, before the segmentation step, it is provided a step of aligning the perfusion angiographic X-ray images to compensate for subject motion. The alignment step is also referred to as registration step.

According to a further embodiment, for the segmentation, the method comprises analyzing, by a neural network, the body related perfusion angiographic X-ray images to identify macrovascular vessels.

In an option of the method, the segmenting the mask for non-body related background is provided by the neural network.

According to an example, the segmentation step comprises: segmenting at least first vessels in at least one of the perfusion angiographic X-ray images based on a predetermined first vessel criteria; and segmenting at least second vessels in at least one of the perfusion angiographic X-ray images based on a predetermined second vessel criteria. The mask generation step comprises: generating at least one first segmentation mask based on the segmented first vessels; and generating at least one second segmentation mask based on the segmented second vessels. The time-density curve extraction step comprises: extracting a first macrovascular-related time density curve for masked image areas based on the at least one first segmentation mask; and extracting a second macrovascular-related time density curve for masked image areas based on the at least one second segmentation mask. The providing step comprises: providing the first and the second macrovascular-related time density curve and the microvascular-related time density curve.

According to a further embodiment of the method, the mask is provided as a non-binary mask such that the image areas with segmented vessels areas and non-segmented-vessel image areas of the body related perfusion angiographic X-ray partially overlap in a predetermined manner.

According to a further embodiment of the method, the region of interest of the subject's body is divided into different local regions assigned to zones of an anatomical model. In an option, standard time density curves are provided for comparison.

According to a further embodiment of the method, additional image-based data is provided for the mask generation; for example, for at least one of the frames in the original sequence.

According to an example, a computer program enabling a processor to carry out the method of one of the examples is provided.

In an example, a computer program or program element for controlling an apparatus according to one of the examples above is provided, which program or program element, when being executed by a processing unit, is adapted to perform the method steps of one of the method examples above.

According to an example, a computer readable medium having stored the program element of the preceding example is provided.

Briefly said, the angiography sequence yields the corresponding DSA from which frame-by-frame mask images for the major vessels are extracted. The mask is used to extract time-density curves for macro- and microvascular perfusion. Parameters extracted from both can be used to span a multi-dimensional space which can be used to group results or make classifications. This can then be used for finding optimal treatment decisions or even for predicting potential benefits from particular endovascular treatment.

As a result, direct visualization of macrovascular and microvascular can be output to the user, e.g. as basis for judgements about different clinical endpoints which could not have been derived without the split in micro- and macrovascular information.

An example of useful application is extracting and using parameters from both resulting curves, which has the potential to provide a more differentiated view on a disease and to group patients into subtypes linked to different treatment decisions. An example of useful application is outcome/endpoint prediction. Further fields of application may involve other anatomical targets for perfusion imaging such as myocardial or brain perfusion.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 schematically shows an example of a device for peripheral perfusion time density curves.
Fig. 2 shows an example of a system for peripheral perfusion imaging.
Fig. 3 shows steps of an example of a method for peripheral perfusion time density curves.
Fig. 4 shows a further example of a method for peripheral perfusion time density curves.
Fig. 5 shows a workflow diagram of an example for peripheral perfusion time density curves.
Fig. 6 shows a multi-dimensional space for which parameters are extracted from both curves of Fig. 5.
Fig. 7 indicates a DSA X-ray image used as a basis for mask generation.
Fig. 8 shows another workflow diagram of a further example for peripheral perfusion time density curves relating to a pre-treatment state in the upper row and a post-treatment state in the lower row.
Fig. 9 shows a macrovascular-related time density curve and a microvascular-related time density curve relating to the pre-treatment state in the upper row and a macrovascular-related time density curve and a microvascular-related time density curve relating a post-treatment state in the lower row.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of', when preceding a list of elements, modify the entire list of elements and do not modify the individual elements of the list.

In an example, a DSA sequence is provided. The major vessels are extracted by segmenting the contrast filling over time. Slightly dilating this segmentation output yields a frame-by-frame mask for the macrovasculature. This mask can be used to solely extract the time-density curve from that sub-area (macrovascular characteristics) or from area of the negative complement of this mask (tissue blushing area, microvascular characteristics). Extracting and using parameters from both resulting curves has the potential to provide a more differentiated view on the disease. Vascular flow characteristics can then be grouped into subtypes. These may be linked to different intervention procedures. The extracted additional information may be provided as enhanced perfusion angiography or enhanced outcome/endpoint prediction.

In an option, for the approach of one segmentation mask for the sequence or the approach of a segmentation mask for each frame, it is provided to make use, e.g. when extracting the masks, of the whole sequence, i.e. the extraction of a mask may exploit temporal behavior/information and not only spatial information in the corresponding frame.

In an example, a mask sequence is computed that corresponds to the acquired 2D angiography sequence. The mask covers image parts in each frame that show contrast flow in major vessels. This frame-by-frame mask can be used to solely extract a time-density curve from that DSA sub-area (macrovascular characteristics) or from the area defined by the negative complement of this mask without the background of the image (microvascular characteristics). The latter exploits the tissue blushing effect (contrast opacification in areas without major vessels) in angiography. The tissue blushing effect provides a relationship to microvascular information and skin perfusion.

In an option, *M* masks for *N* frames are provided. For example, one mask is provided and used per each of M motion states, such as in cardiac angiography.

As an example of peripheral perfusion time density curves, extracting and summarizing this information involves fitting models such as gamma variate curves to the time sequence and computing parameters such as peak height, time-to-peak, plateau width etc. from it.

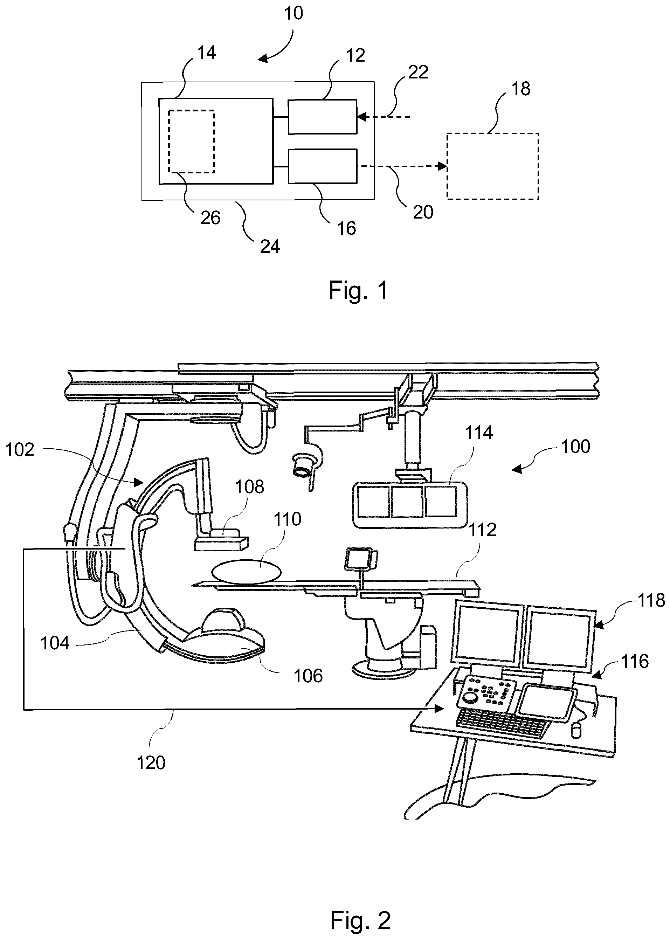

Fig. 1 schematically shows an example of a device 10 for peripheral perfusion time density curves. The device 10 comprises an image data input 12, a data processor 14 and an output interface 16. The image data input 12 is configured to receive a sequence of perfusion angiographic X-ray images of a region of interest of a subject's body. The data processor 14 is communicatively coupled to the image data input 12 and the output interface 16.

The data processor 14 is configured to generate a mask for non-body related background in the sequence of X-ray images and mask-out the non-body related background in the perfusion angiographic X-ray images to achieve body related perfusion angiographic X-ray images. The data processor 14 is also configured to segment vessels in at least one of the body related perfusion angiographic X-ray images and to generate at least one segmentation mask based on the segmented vessels. Further, the data processor 14 is configured to extract at least one macrovascular-related time density curve for image areas with segmented vessels based on the at least one segmentation mask, and to extract at least one microvascular-related time density curve for non-segmented-vessel image areas of the body related perfusion angiographic X-ray images based on the at least one segmentation mask.

The output interface 16 is configured to provide the at least one macrovascular-related time density curve and the at least one microvascular-related time density curve.

In an option, one macrovascular-related time density curve and one microvascular-related time density curve are extracted and provided.

In another option, a plurality, e.g. two or more macrovascular-related time density curves and a plurality, e.g. two or more microvascular-related time density curves are extracted and provided.

In an option, a first vessel mask and a second vessel mask are provided.

In a further option, several masks are provided, but the same ones are used over the frames of the sequence.

In an example, provided in Fig. 1 as an option, a display 18 is provided for displaying the macrovascular-related time density curve and the microvascular-related time density curve. The data processor 14 may provide the macrovascular-related time density curve and the microvascular-related time density curve as display data to the display, data-connected to the output interface 16. The output of display data and other data is indicated with a first hashed arrow 20. The input of image data is indicated with a second hashed arrow 22. A frame 24 indicates the option to provide the image data input 12, the data processor 14 and the output interface 16 in an integrated manner, for example in a common housing. In an option, the image data input 12, the data processor 14 and the output interface 16 are provided as separate arrangements.

The "image data input" relates to a supply of image data. The image data input 12 thus provides an interface for inputting image data. The image data input 12 can also be referred to as image data source, image data supply, data input, data supply unit, data input unit or data supply module. The image data input 12 can be connected to a data storage or to an imaging source like an X-ray imaging arrangement.

The image data input 12 provides the data to the data processor 14. The term "receive" relates to a (for example, passive) provision of data to the image data input 12 that feeds the data to the data processor 14. Alternatively, also the term "obtain" could be used that relates to a (for example, active) behavior of the image data input where e.g. the processor makes or causes the image data input 12 to receive the data from an imaging entity or imaging device.

The "data processor" relates to image data processing. The data processor 14 can also be referred to as processor, processing unit or computing module.

The "output interface " relates to the provision of the result of the image data processing. The output interface 16 can also be referred to as output unit or output module.

As an effect, the provision of the separated micro- and macrovascular curves provides an improved knowledge about the blood flow and thus blood supply situation, e.g. in peripheral body portions. It is thus also possible to conduct intervention assessments, e.g. by comparing the situation before and after a treatment. The extraction of the microvascular-related data (of the non-masked areas) and thus the separation into two distinct curves, avoids that the relatively stronger blood flow in main vessels overrides the situation in the tissue section. When presented as two curves, it is possible to assess the macrovascular achievement as well as the microvascular achievement.

The masking allows to retrieve more of the information that is already present in the 2D X-ray perfusion images. As an example, the perfusion signal of the microvascular level may present a smaller fraction of the overall data, from which most, e.g. due to higher contrast, is related to the macrovascular level. As an example, less than 10% of the DSA image data content in terms of intensity may actually relate to microvascular perfusion, e.g. less than 5%. As another example, less than 10% of the DSA image data content in terms of area may actually relate to microvascular perfusion, e.g. less than 5%.

The term "mask for non-body related background" is used to identify those parts that do not belong to possible parts with perfusion, i.e. those parts that do not show the subject's body, but only surrounding background. This mask is used for one purpose: To identify those parts in the image that will be covered by the mask, e.g. that will be deleted in the image data downstream to provide a resulting image (the body related perfusion angiographic X-ray images) not showing the parts covered by the mask. The mask is thus defining those portions to be excluded here.

The "segmentation mask" is used to identify the vessel related image areas. Here, the mask is used for two opposite purposes: In a first purpose, the segmentation mask is used as positive definition for the areas to be used, i.e. the areas covered by the mask: For the macrovascular-related time density curve for segmented vessel image areas, the areas covered by the mask are used. In a second purpose, the segmentation mask is used as negative definition for the areas not to be used, i.e. the areas outside the mask: For the microvascular-related time density curve for segmented vessel image areas, the areas covered by the mask are used.

The image areas of the body related perfusion angiographic X-ray images thus comprise a first category of areas, for which vessels have been identified and segmented. The image areas of the body related perfusion angiographic X-ray images further comprise a second category of areas, for which vessels have not been identified and thus also not segmented. If the segmentation mask covers the areas with the vessels, this area can be referred to as masked area. The areas without segmented vessel would then be the non-masked image areas. The background image parts, i.e. areas not showing any body portions, have already been masked out. Thus, the remaining image areas or parts (starting with the complete image, masking out the background areas or parts (these not considered at all) and then masking out the segmented vessel areas or parts (these separately considered for the macrovascular perfusion), resulting in the remaining image areas or parts (considered for the microvascular perfusion) can be referred to as non-masked image areas or parts. From the body-related image areas or parts, which result from the first non-body parts masking out step, the image areas or parts with the segmented vessels can then be referred to as masked-image areas or parts (of the body-related image areas or parts).

In an example, the "masked image areas" relates to those parts of the image that are covered by the masks. In an example, the "non-masked image areas" relates to those parts of the image that are not covered by the masks. In an example, the macrovascular-related time density curve for masked image areas relates to areas within the (at least one segmentation) mask, and the microvascular-related time density curve for masked image areas relates to areas outside the (at least one segmentation) mask, but areas within the body portion related image parts.

In an example, the non-body parts masking is provided first and then the further vessel segmenting masking is provided. In an option, this is provided for each of the images of the sequence of perfusion angiographic X-ray images of the region of interest of the subject's body. In another option, this is provided for one or only several of the images of the sequence of perfusion angiographic X-ray images of the region of interest of the subject's body.

In an alternative example, the vessel segmenting masking is provided first and then the further non-body parts masking is provided. In an option, this is provided for each of the images of the sequence of perfusion angiographic X-ray images of the region of interest of the subject's body. In another option, this is provided for one or only several of the images of the sequence of perfusion angiographic X-ray images of the region of interest of the subject's body.

Thus, as an improvement, blood flow, blood supply or blood perfusion related phenomena that may be below the visibility of the non-modified perfusion angiographic X-ray images become visible by the mask-related image data manipulation generating the two kind of image base, i.e. the masked image areas and the non-masked image areas. As an example, wound blush effects normally below visibility becomes visible.

According to an example, one mask is provided for each of the images of the sequence of perfusion angiographic X-ray images.

In an option, the data processor 14 is configured to align the perfusion angiographic X-ray images to compensate for subject motion before the segmentation.

In another option, for the segmentation, the data processor 14 comprises a neural network 26 (indicated with a hashed frame as option in Fig. 1) that is configured to analyze the body related perfusion angiographic X-ray images to identify macrovascular vessels. In an option, the neural network is also configured to segment the mask for non-body related background. In another option, the data processor 14 is configured to threshold the outcome of the analysis for the segmentation.

In an example, for segmentation, it is locally decided whether a pixel in a frame belongs to a mask. A nonlinear processing step, e.g. neural network, may be provided that considers the global image information from this frame and maybe also the content of other frames, i.e. temporal information. This step outputs non-binary masks that can then be thresholded.

Fig. 2 shows an example of a system 100 for peripheral perfusion imaging. The system 100 comprises an X-ray imaging device 102. As an example, the X-ray imaging device 102 is shown as a ceiling mounted movable C-arm structure 104 with an X-ray source 106 and an X-ray detector 108 attached to ends of the C-arm. For illustration purposes, also an object 110, i.e. a subject, is shown supported by a patient support 112 for examination, intervention, other treatment or imaging purposes. The system 100 further comprises a display device 114, e.g. in form of a monitor arrangement shown movably suspended from a ceiling. The system 100 also comprises a device 116 for peripheral perfusion time density curves according to one of the preceding and following examples. Further, again for illustration purposes, a control console with a monitor 118 and other user interface equipment like a mouse, a keyboard, a control panel and a touchpad is indicated on the right side. The device 116 for peripheral perfusion time density curves may be integrated in the control console. A line 120 indicates the data connection (wire or wireless) of the X-ray imaging device 102 and the device 116 for peripheral perfusion time density curves. The X-ray imaging device 102 is configured to provide perfusion angiographic X-ray images of a region of interest of the subject's body. The display device 114 is configured to display the macrovascular-related time density curve and the microvascular-related time density curve.

In an example, not further shown in detail, for the segmentation, the data processor 14 is configured to segment at least first vessels in at least one of the perfusion angiographic X-ray images based on a predetermined first vessel criteria and to segment at least second vessels in at least one of the perfusion angiographic X-ray images based on a predetermined second vessel criteria. For the mask generation, the data processor 14 is configured to generate at least one first segmentation mask based on the segmented first vessels, and to generate at least one second segmentation mask based on the segmented second vessels. For the time-density curve extraction, the data processor 14 is configured to extract a first macrovascular-related time density curve for masked image areas based on the at least one first segmentation mask, and to extract a second macrovascular-related time density curve for masked image areas based on the at least one second segmentation mask. For the provision of the time density curves, the data processor 14 is configured to provide the first and the second macrovascular-related time density curve and the microvascular-related time density curve.

In an example, not further shown in detail, the mask is provided as a non-binary mask such that the image areas with segmented vessels areas and non-segmented-vessel image areas of the body related perfusion angiographic X-ray images partially overlap in a predetermined manner.

In an example, also not further shown in detail, the data processor 14 is configured to divide the region of interest of the subject's body into different local regions assigned to zones of an anatomical model. Further, the image data input 12 is configured to provide standard time density curves for comparison.

As an example, the zones may overlap in 2D. The zones can also be provided as non-binary zones.

In an example, not further shown in detail, additional image-based data is provided for the mask generation.

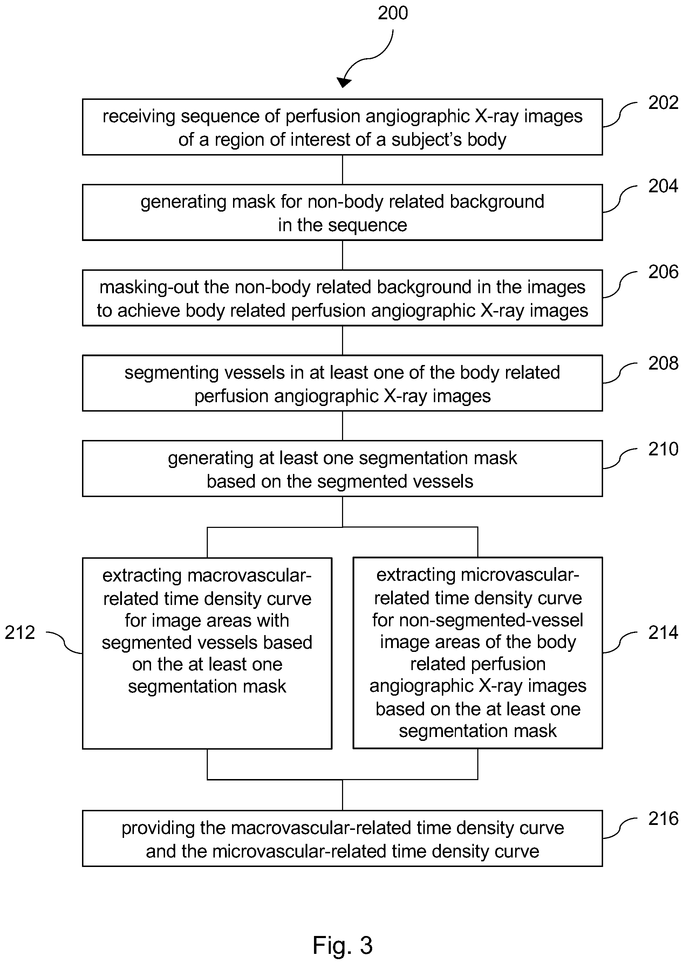

Fig. 3 shows steps of an example of a method 200 for peripheral perfusion time density curves. The method 200 comprises the following steps: In a first step 202, also referred to as step a), a sequence of perfusion angiographic X-ray images of a region of interest of a subject's body is received. In a second step 204, also referred to as step b), a mask for non-body related background in the sequence of X-ray images is generated. In a third step 206, also referred to as step c), the non-body related background in the perfusion angiographic X-ray images is masked-out to achieve body related perfusion angiographic X-ray images. In a fourth step 208, also referred to as step d), vessels in at least one of the body related perfusion angiographic X-ray images are segmented. In a fifth step 210, also referred to as step e), at least one segmentation mask is generated based on the segmented vessels. In a sixth step 212, also referred to as step f), at least one macrovascular-related time density curve is extracted for image areas with segmented vessels based on the at least one segmentation mask. In a seventh step 214, also referred to as step g), at least one microvascular-related time density curve is extracted for non-segmented-vessel image areas of the body related perfusion angiographic X-ray images based on the at least one segmentation mask. In an eighth step 216, also referred to as step h), the at least one macrovascular-related time density curve and the at least one microvascular-related time density curve are provided.

It is noted that the numbering of the steps does not limit the steps to this order. For example, the at least one microvascular-related time density curve is extracted before the at least one microvascular-related time density curve is extracted. In another example, the curves are extracted more or less simultaneously.

Instead of "receiving a sequence of perfusion angiographic X-ray images", this can also be referred to as "obtaining a sequence of perfusion angiographic X-ray images" or as "providing a sequence of perfusion angiographic X-ray images".

The term "peripheral perfusion" relates to blood supply in peripheral parts of a subject's body, i.e. in vascular structures in peripheral body regions like feet or hands. The blood supply comprises blood flow, i.e. blood stream, in larger vessels, e.g. arteries and veins. The blood supply also comprises the flow and thus supply in smaller vascular structures, capillaries, arterioles, venules, diffusion through tissue, e.g. to provide sufficient blood supply in tissue areas or regions.

The term perfusion relates to the supply of blood to tissue structures.

As an example, the region of interest is a peripheral body portion, for example a distal limb portion, such as a region of a foot, of a hand, of a lower arm portion or of a lower leg portion.

The sequence of perfusion angiographic X-ray images is provided as a sequence of images showing contrast flow in a vasculature structure.

The device for perfusion time density curves can also be referred to as device for perfusion imaging or device for perfusion angiography. It is noted that the device is provided for image data processing.

In an option, the device is separate from an actual imaging apparatus. Simply said, in an option, the device is not capable of imaging. The device is only provided within the context of peripheral perfusion angiography. In another option, the device is provided with the capability of imaging.

The "perfusion angiographic X-ray images" relate to X-ray images acquired during the application of contrast agent which allows to visualize the vascular structure inside a subject.

The "region of interest of a subject's body" relates to part of the subject's body which is subject to examination or treatment.

The "segmenting" relates to identifying parts of the vascular structure based on the visible segments in the image data.

In an example, the vessel segmenting is provided by a neural network, e.g. by a convoluted neural network, providing complex image analyzing sub-steps.

In an example, the vessel segmenting is provided based on identifying vessel parameter in the image data. The "vessel parameter" relates to a criteria or parameter that allows the identification of an image part to relate to a vessel. As an example, a contrast ratio, an attenuation value, a minimum dimension or a maximal dimension can be used as parameter. The criteria can be provided as pre-set parameters that can be compared to an actual characteristic or value. The parameter can relate to trigger a respective identification of being equal or above, or in other cases of being equal or below the respective parameter value.

The "segmentation mask" relates to a mask depicting the segmented parts, i.e. more or less covering the segmented parts. The "generating" relates to computing the mask.

The "time density curve" relates to a curve showing the development of the contrast agent over time during the flow of the contrast agent though the particular point in the image. The term "macrovascular-related" relates to the flow inside the macrovascular structure like the vessels. The term "microvascular-related" relates to the flow inside the microvascular structure like the tissue.

The "extracting" relates to the generation of the curves based on the provided information. As an example, known methods are provided for the curve extraction.

The "providing" relates to the provision of the two curves for further purposes or further data processing steps. An example of the providing is the display of the two curves.

The application of the mask provides to disentangle the measured signal into spatial contribution. The provision of the macrovascular-related time density curve and the microvascular-related time density curve thus provides spatially disentangled time density curves, or spatially disentangled time density information.

For the extraction of the microvascular-related time density curve for non-masked image areas, areas outside the subject's body are excluded.

In an example of the method, the macrovascular-related time density curve and the microvascular-related time density curve are displayed.

In an example of the method, the angiographic X-ray images are provided as digital subtraction angiography (DSA) images, in which the non-vasculature background is subtracted based on a non-contrast injected image.

In an example of the method, the macrovascular-related time density curve and the microvascular-related time density curve are provided for visualization steps. For example, the macrovascular-related time density curve and the microvascular-related time density curve are shown as two separate graphs. In another example, the macrovascular-related time density curve and the microvascular-related time density curve are subject to parameter extraction and the result is shown in a graph, in which, as an option, classification indication is also provided.

The "body related perfusion angiographic X-ray images" can also be referred to as "body related areas or parts of the perfusion angiographic X-ray images", or as "body related perfusion angiographic X-ray image areas or parts" or as "body related areas or parts".

The image areas with segmented vessels can also be referred to as image areas with segmented vessels of the body related perfusion angiographic X-ray images. The image areas with segmented vessels can also be referred to as "masked image areas" of the body related perfusion angiographic X-ray images. In view of the masking step used to identify those parts around the body part, the "masked image areas" are so-to-speak "double-masked" image areas or portions. The non-segmented-vessel image areas of the body related perfusion angiographic X-ray images can also be referred to as non-segmented-vessel image areas. The image areas outside the segmented vessels can also be referred to as "non-masked image areas" of the body related perfusion angiographic X-ray images, or as "non-masked image areas" of the perfusion angiographic X-ray images.

In an option, not further shown in detail, vessels are segmented in a plurality of the perfusion angiographic X-ray images. Further, a segmentation mask sequence is generated based on the segmented vessels in the plurality of the perfusion angiographic X-ray images. For the extraction step 212, the macrovascular-related time density curve for masked image areas and the microvascular-related time density curve for non-masked image areas are extracted based on the segmentation mask sequence.

According to a further example of the method, also not shown in detail, one mask is provided for each of the images of the sequence of perfusion angiographic X-ray images. In other words, a mask is provided for each point in time.

In an alternative option, one mask is provided per sequence.

According to a further example of the method, also not shown in detail, before the segmentation step, it is provided a step of aligning the perfusion angiographic X-ray images to compensate for subject motion. The alignment step is also referred to as registration step.

According to a further example of the method, also not shown in detail, for the segmentation, the method comprises analyzing, by a neural network, the body related perfusion angiographic X-ray images to identify macrovascular vessels. In an option, the outcome of the analysis is thresholded for the segmentation.

According to an embodiment of the method, it is provided a step of activating an imaging apparatus or imaging system to obtain and record an image of a subject by the imaging apparatus or imaging system.

In an example, the activating of the imaging apparatus or imaging system comprises a controlling of the imaging apparatus or imaging system.

In an example of the method, it also is provided to activate the apparatus or imaging system to provide further data, if needed.

Further, after obtaining the image, the image data is provided and received for the further processing as desired. In an example, a respective software is provided that is tied the software used in conjunction with the imaging.

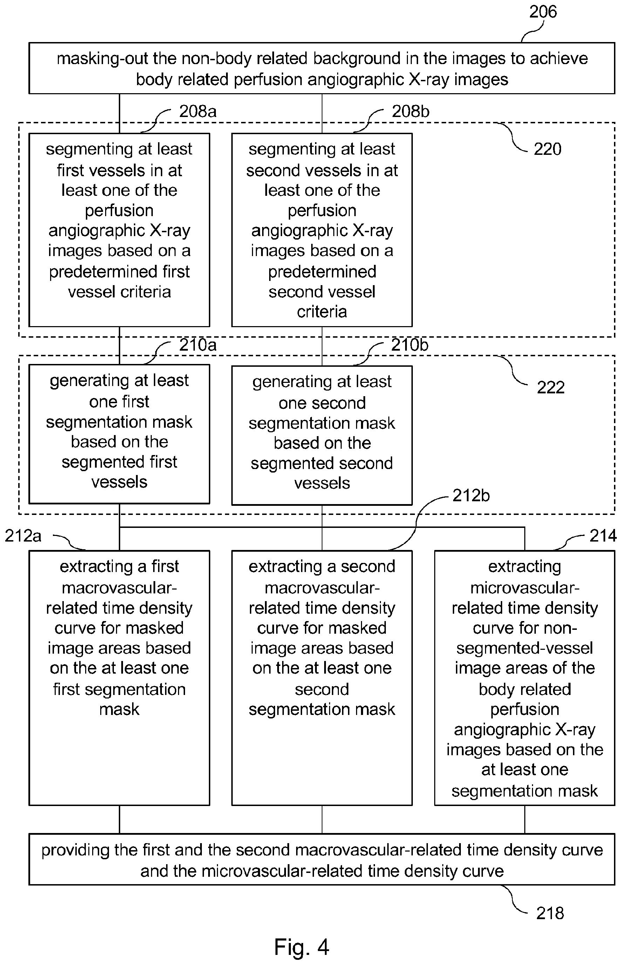

Fig. 4 shows a further example of the method for peripheral perfusion time density curves.

As indicated in Fig. 4, the segmentation step 208 comprises a first segmentation sub-step 208a of segmenting at least first vessels in at least one of the perfusion angiographic X-ray images based on a predetermined first vessel criteria, and a second segmentation sub-step 208b of segmenting at least second vessels in at least one of the perfusion angiographic X-ray images based on a predetermined second vessel criteria.

As further indicated in Fig. 4, the segmentation mask generation step 210 comprises a first segmentation sub-step 210a of generating at least one first segmentation mask based on the segmented first vessels, and a second segmentation sub-step 210b of generating at least one second segmentation mask based on the segmented second vessels.

As also indicated in Fig. 4, the time-density curve extraction step 212 comprises a first extracting sub-step 212a of extracting a first macrovascular-related time density curve for masked image areas based on the at least one first segmentation mask, and a second extracting sub-step 212b of extracting a second macrovascular-related time density curve for masked image areas based on the at least one second segmentation mask.

As also indicated in Fig. 4, the providing step 216 comprises a sub-step 218 of providing the first and the second macrovascular-related time density curve and the microvascular-related time density curve.

A first dotted frame 220 indicates that the two steps 208a, 208b of segmenting the first and second vessels are provided in parallel, so-to-speak as a common segmenting step. A second dotted frame 222 indicates that the two steps of generating the first and second segmentation masks are provided in parallel, so-to-speak as a common generating step. The step 214 of extracting the microvascular-related time density curve considers the result or outcome of both generating sub-steps 210a and 210b.

The first and second vessel criteria allow to differentiate between two different classes or types of vessels, such larger and smaller vessels, or with different types of blood pressure, like arteries and veins. As an example, the first vessel criteria relates to a first vessel parameter range; the second vessel criteria relates to a second vessel parameter range. In an example, the first vessel parameter range comprises a first vessel threshold parameter range. In another example, the second vessel parameter range comprises a second vessel threshold parameter range.

In an example, the mask is provided as a binary mask such that the image areas with segmented vessels areas and non-segmented-vessel image areas of the body related perfusion angiographic X-ray are delimitated, i.e. separated from each other.

According to a further example of the method, also not shown in detail, the mask is provided as a non-binary mask such that the image areas with segmented vessels areas and non-segmented-vessel image areas of the body related perfusion angiographic X-ray partially overlap in a predetermined manner.

An overlap is provided for example between the vessel segmented areas and the surrounding non-vessel body-related image parts.

This considers that the masks are provided in 2D projections of the image data which implies a certain degree of blur in the mask building procedure.

In an alternative option, a precise delimitation is provided.

The image areas with segmented vessels areas can be referred to as masked areas; the non-segmented-vessel image areas can be referred to as non-masked areas.

As an example of the method, the segmented first vessels are arteries and the segmented second vessels are veins. The first segmentation mask relates to the arteries and the second segmentation mask relates to the veins. Thus, separate time density curves are provided for arteries and veins, in addition to the tissue-perfusion related density curve. As an example of the method, to generate more complex masks, local "segmentation" in a single frame draws information from the full frame itself, and also from temporal behavior visible in other frames.

In another option, the vascular structure is divided, i.e. segmented, into large, medium and small vessels thus providing three masks, resulting in three macrovascular-related time density curves and one microvascular-related time density curve.

In an option, temporal filtering of the perfusion images is provided to identify vasculature shortcuts. In another option, a vessel model is provided and a check is performed if blood flow behavior is according to standard blood flow.

According to a further embodiment of the method, the region of interest of the subject's body is divided into different local regions assigned to zones of an anatomical model. In an option, standard time density curves are provided for comparison.

In an example, the different local regions are assigned to zones of the anatomical model in 3D. The zones may thus overlap when projected in 2D.

In an option, the zones are provided at least partly overlapping in 3D. Thus adjoining spatial overlap-regions may be defined that are considered for each of the neighboring regions.

In another example, the different local regions are assigned to zones of the anatomical model when projected in 2D. They may be delimitated from each other in 2D or they may also overlap.

According to a further example of the method, also not shown in detail, additional image-based data is provided for the mask generation.

As an example, a generic 3D model is used. For identifying a subject's angiosome regions, the generic model is adapted to the subject. Thus, an improved identification of which tissue is supplied by which vessel is achieved.

As an example, previous 3D image data or a model derived from it is used to adapt a vessel structure of a model to the current subject.

As an example, spectral X-ray imaging is used providing additional information.

As a further example, iodine maps are provided for improved identification of the actual blood flow,

According to a further example of the method, the macrovascular-related time density curve and the microvascular-related time density curve are being displayed.

The method for perfusion time density curves can also be referred to as method for perfusion imaging or method for perfusion angiography. It is noted that the method is provided for image data processing.

Similar options as for the device are also provided for the method for peripheral perfusion time density curves. In an option, the method is separate from an actual imaging procedure. Simply said, in an option, the method does not provide imaging. The method is only provided within the context of peripheral perfusion angiography. In another option, the method is provided with the capability of imaging, i.e. imaging is provided.

The method provides a separation of the perfusion image data into at least two separate time density curves.

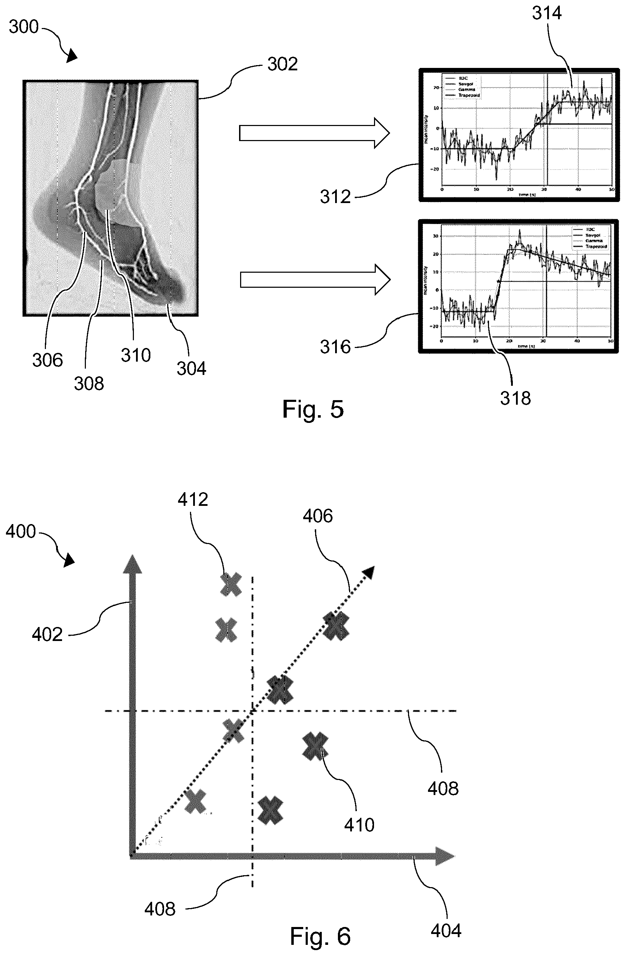

Fig. 5 shows a workflow diagram 300 of an example for peripheral perfusion time density curves. An angiography sequence 302 yields the DSA corresponding DSA from which frame-by-frame mask images for the major vessels are extracted, as indicated on the left. The angiography sequence 302 is shown with a subject's peripheral body portion like a foot 304. A vascular structure 306 is indicated as well as perfusion regions 308. Further, also a region 310 of particular interest is depicted. The masks are used to extract time-density curves for macrovascular perfusion 312, as depicted in a resulting graph 314 in the upper half on the right, and for microvascular perfusion 316, as depicted in a resulting graph 318 in the lower half on the right. Two broad arrows indicate the respective extraction procedures. The macrovascular perfusion graph 314 and the microvascular perfusion graph 318 may be provided as combined curves showing more than one extracted value.

Fig. 6 shows a so-called multi-dimensional space 400 for which macro parameters 402 and micro parameters 404 are extracted from both curves of Fig. 5. The multi-dimensional space 400 can be used by e.g. the surgeon to group subjects/individuals, make treatment decisions or predict potential benefits from endovascular treatment. As an example, a dotted diagonally running line 406 indicates extracted joined parameter. A hashed cross 408 indicates separate sectors, such as a first sector in the upper left relating to a first remark of e.g. "no intervention medication", a second sector in the upper right relating to a second remark of e.g. "good prognoses", a third sector in the lower right relating to a third remark of e.g. "intervention" and a fourth sector in the lower left relating to a fourth remark of e.g. "intervention and medication". Respective first marks 410 refer to macrovascular-related perfusion, and respective second marks 412 refer to microvascular-related perfusion.

In an option, based on Fig. 6, an example is provided where a curve model is fit to each of the individual time density curves. Further, parameters are extracted and then illustrated in a scatter/cluster plot, e.g. micro versus macro parameter.

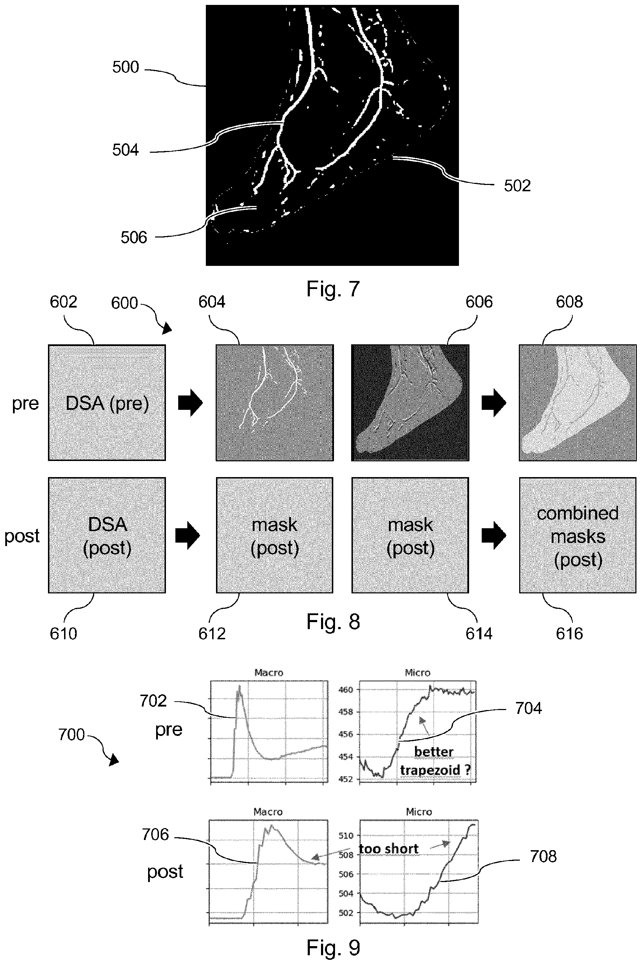

Fig. 7 indicates a DSA X-ray image 500 used as a basis for mask generation. The image 500 comprises parts that indicate a contour 502, e.g. contour of a foot. Further, vessel related parts 504 are indicated as well as tissue areas 506 that are also subject to peripheral perfusion.

Fig. 8 shows another workflow diagram 600 of a further example for peripheral perfusion time density curves relating to a pre-treatment state in the upper row and a post-treatment state in the lower row. For the pre-treatment state, a respective DSA sequence 602 is provided that is used for generation of vessel related masks 604 and tissue related masks 606 which are then resulting in combined masks 608, i.e. combined pre-treatment masks. For the post-treatment state, a respective DSA sequence 610 is provided that is used for generation of vessel related masks 612 and tissue related masks 614 which are then resulting in combined masks 616, i.e. combined post-treatment masks.

Fig. 9 shows a result of the separation into two types of perfusion in form of a diagram set 700 comprising a macrovascular-related time density curve 702 and a microvascular-related time density curve 704 in the upper row relating to the pre-treatment state of Fig. 8, and, for comparison, a macrovascular-related time density curve 706 and a microvascular-related time density curve 708 in the lower row relating to the post-treatment state of Fig. 8. The curves can be used for notes, as indicated for example by "too short" in view of possible further supporting examination.

The term "subject" may also be referred to as individual. The "subject" may further also be referred to as patient, although it is noted that this term does not indicate whether any illness or disease is actually present with the subject.

In an example, four modules are provided: A frame alignment or registration module compensates for patient motion. It is noted that this is provided as an option. A segmentation module extracts the segmentation mask, e.g. containing the major vessels or angiosome regions and the background. An extraction module for time-density curve computation from masked areas, for model fit to these curves and for parameter extraction Another extraction module computes a time-density curve from masked areas for fitting a model to these curves and for parameter extraction. An output module visualizes the results or passes it on to other downstream elements such as an automatic reporting module, or a patient subtyping module or a disease outcome prediction module.

In an example of the frame alignment or registration module, it is provided that the angiography sequence may be subject to patient motion during the image acquisition process. The registration module is supposed to compensate for this effect by resampling the voxels such that the same 2D image coordinate corresponds to the projection ray penetrating the same 3D anatomy.

In an example of the segmentation module, it is provided that the segmentation module extracts the major vessels from each frame. After compensating e.g. for foot motion over time, this can be achieved by thresholding the image for the high-intensity contrast pixels. Alternative approaches can provide higher robustness against image noise or severe motion. These include vesselness filters, region-grow algorithms whose frame-wise seed can be adjusted to travel down the vessel tree following the contrast flow, or data-driven learning algorithms such as convolutional segmentation networks. To account for partial volume effects, for blooming or simply for inaccuracies in the segmentation process, morphological dilation may be used to add a safety margin around the vessel segmentation to make sure the major vessels and collaterals are covered. The segmentation module may also be configured to segment the silhouette of the foot by similar means as described above. As an option, the segmentation module can either run in a fully automatic mode or allow for user interaction to improve the segmentation results.

In an example of the feature extraction module, it is provided that, given the segmentation mask, this module sums up the intensities per frame within the mask (macrovascular information) and outside the mask, but within the foot silhouette (microvascular information) to obtain the corresponding time-density curves. After fitting curve models such as gamma variate curves to it, parameters like time of (contrast) arrival, peak height, time-to-peak, plateau width etc. can be extracted and used by the output module. In an option, an extension sub-module avoids explicit curve model fit, but uses the curves directly to make predictions from it, e.g. outcome prognosis, patient type and others. For example, this is realized by training hidden Markov or other recurrent models.

In another option, an extension sub-module extracts "growth features" which are obtained as follows. From the major vessel mask, morphological operators can gradually grow the mask until it fills the entire foot silhouette. From a time-density perspective, this growth starts at the macrovascular curve and ends at the macro- and microvascular curve. The characteristics extracted from curve changes over dilation/filling steps give rise to "growth features" which provide information about how many contrast opacification is added at what "distance" from the major vessels. Since imaging is happening in the 2D domain, this is not the true 3D "distance" from the major vessels. In addition to the approach described, a weighted integration of different distances can be performed. A consistent projection angle with respect to the foot is required to render these features useful, as it is not possible to measure true 3D distances on the 2D projection.

In an example of the output module, it is provided that the extracted information is output to the user either directly via the time-density curves or by color-coding extracted parameters into the DSA image. Less explicit outputs can also be provided via patient subtyping charts, automatic reports or in the form of predicting treatment decisions and likely outcome.

As an option, general segmentation masks and angiosome regions are provided. The segmentation mask can either represent major/minor vessel regions or describe some other tessellation of the 2D image such as angiosome regions. These regions can also serve as a recipe to further decompose the signal of each frame into regional contributions. In particular, more than two regions are possible.

As an option, non-binary segmentation masks are is provided. The segmentation masks do not need to be binary. They can be used to represent a continuum of splits by treating the threshold value generating a binary mask as a user-defined parameter. This can also be helpful when segmentation masks overlap in the 2D projection of the underlying 3D anatomy. Hence, the decomposition is weighted by the relative contribution of the region to the 2D projection.

As an option, previous 3D data sets are provided. If a previous 3D CT, MRI, or cone beam CT image of the foot is available, a 3D model of the foot including binary masks (e.g. angiosome regions) can be adapted to the 3D image. The 2D projection can then be registered to the previous 3D data set, allowing to position non-binary segmentation masks as described above. When a 3D data set is available, physiological knowledge of which artery feeds which anatomical structure (muscle, bone, etc.) can be used to create more complex and more individual probabilistic 3D masks. These masks can be projected to the actual 2D projection image for analysis.

As an option, temporal disentanglement is provided. The segmentation masks allow to disentangle the measured signal into spatial contributions. Similarly, disentanglement in temporal direction can be included. Given a biophysical perfusion and blood-flow model, one can also disentangle temporal consecutive aspects of perfusion sequence i.e. normal perfusion, backflow etc. in order to better understand the generated image.

As an option, spectral analysis is provided. Next to classical integrating X-ray detectors, the methods described above can also be applied to spectral X-ray projection data. These can be generated either by dual layer detector data or using kVp switching with or without additional filtering. Even better results are to be expected when using this acquisition mode due to the ability to transform the data into iodine maps or at least to reduce calcium / bone overlay on the projections.

According to an embodiment, it is provided to also make use of the masks to re-weight the perfusion signal regionally-dependent, e.g. one weight per mask, and sum the whole area up into one time density curve again.

In another example, the re-weight is provided for more than one region, e.g. one time density curve for a heel part and one time density curve for a forefoot part.

In an option, for combining the macrovascular-related time density curve and the microvascular-related time density curve, regions are subject to a re-weighted mixing.

In fact, clinically relevant measurements require knowledge of perfusion, i.e. blood content over time. Although the blood content should be quantified by means of red blood cells at a certain location, it is the contrast medium content which is measured by angiography. As a low viscosity liquid, the contrast medium resides in the blood plasma, which nominally maskes perfusion angiography a proxy for blood plasma rather than for blood content. The hematocrit, i.e. ratio between blood cell content and plasma, differs by anatomical properties, e.g. vessel caliber. Thus, there is less hematocrit in the capillaries (relating to the microvascular aspect) than in the vessels (microvascular aspect).

To get a time density curve correlated to the blood content, and not plasma only, in an example, it is provided to correct for this and get the masks as described, but re-weight the corresponding signals under the masks before combining them into one time density curve again.

An example of a hematocrit ratio is around 65:100 for micro:macro. Depending on the anatomy, variations of up to +/- 25% may be applied.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit or be distributed over more than one computer units, which might also be part of an embodiment of the present invention. This computing unit may be adapted to perform or induce a performing of the steps of the method described above. Moreover, it may be adapted to operate the components of the above described apparatus. The computing unit can be adapted to operate automatically and/or to execute the orders of a user. A computer program may be loaded into a working memory of a data processor. The data processor may thus be equipped to carry out the method of the invention.

Aspects of the invention may be implemented in a computer program product, which may be a collection of computer program instructions stored on a computer readable storage device which may be executed by a computer. The instructions of the present invention may be in any interpretable or executable code mechanism, including but not limited to scripts, interpretable programs, dynamic link libraries (DLLs) or Java classes. The instructions can be provided as complete executable programs, partial executable programs, as modifications to existing programs (e.g. updates) or extensions for existing programs (e.g. plugins). Moreover, parts of the processing of the present invention may be distributed over multiple computers or processors.

As discussed above, the processing unit, for instance a controller implements the control method. The controller can be implemented in numerous ways, with software and/or hardware, to perform the various functions required. A processor is one example of a controller which employs one or more microprocessors that may be programmed using software (e.g., microcode) to perform the required functions. A controller may however be implemented with or without employing a processor, and also may be implemented as a combination of dedicated hardware to perform some functions and a processor (e.g., one or more programmed microprocessors and associated circuitry) to perform other functions.

Examples of controller components that may be employed in various embodiments of the present disclosure include, but are not limited to, conventional microprocessors, application specific integrated circuits (ASICs), and field-programmable gate arrays (FPGAs).

This exemplary embodiment of the invention covers both, a computer program that right from the beginning uses the invention and a computer program that by means of an up-date turns an existing program into a program that uses the invention.

Further on, the computer program element might be able to provide all necessary steps to fulfil the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section. A computer program may be stored and/or distributed on a suitable medium, such as an optical storage medium or a solid-state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated, and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A device (10) for peripheral perfusion time density curves, comprising:
- an image data input (12);
- a data processor (14); and
- an output interface (16);
wherein the image data input is configured to receive a sequence of perfusion angiographic X-ray images of a region of interest of a subject's body;
wherein the data processor, communicatively coupled to the input and output, is configured to:
- generate a mask for non-body related background in the sequence of X-ray images and mask-out the non-body related background in the perfusion angiographic X-ray images to achieve body related perfusion angiographic X-ray images;
- segment vessels in at least one of the body related perfusion angiographic X-ray images;
- generate at least one segmentation mask based on the segmented vessels; and
- extract at least one macrovascular-related time density curve for image areas with segmented vessels based on the at least one segmentation mask; and extract at least one microvascular-related time density curve for non-segmented-vessel image areas of the body related perfusion angiographic X-ray images based on the at least one segmentation mask; and
wherein the output interface is configured to provide the at least one macrovascular-related time density curve and the at least one microvascular-related time density curve.

2. Device according to claim 1, wherein one mask is provided for each of the images of the sequence of perfusion angiographic X-ray images.

3. Device according to claim 1 or 2, wherein the data processor is configured to align the perfusion angiographic X-ray images to compensate for subject motion before the segmentation.

4. Device according to one of the preceding claims, wherein, for the segmentation, the data processor comprises a neural network (26) that is configured to analyze the body related perfusion angiographic X-ray images to identify macrovascular vessels;
wherein the neural network is also configured to segment the mask for non-body related background; and
wherein the data processor is configured to threshold the outcome of the analysis for the segmentation.

5. Device according to one of the preceding claims, wherein, for the segmentation, the data processor is configured to segment at least first vessels in at least one of the perfusion angiographic X-ray images based on a predetermined first vessel criteria and to segment at least second vessels in at least one of the perfusion angiographic X-ray images based on a predetermined second vessel criteria;
wherein, for the mask generation, the data processor is configured to generate at least one first segmentation mask based on the segmented first vessels, and to generate at least one second segmentation mask based on the segmented second vessels;
wherein, for the time-density curve extraction, the data processor is configured to extract a first macrovascular-related time density curve for masked image areas based on the at least one first segmentation mask, and to extract a second macrovascular-related time density curve for masked image areas based on the at least one second segmentation mask; and
wherein, for the provision of the time density curves, the data processor is configured to provide the first and the second macrovascular-related time density curve and the microvascular-related time density curve.

6. Device according to one of the preceding claims, wherein the mask is provided as a non-binary mask such that the image areas with segmented vessels areas and non-segmented-vessel image areas of the body related perfusion angiographic X-ray images partially overlap in a predetermined manner.

7. Device according to one of the preceding claims, wherein the data processor is configured to divide the region of interest of the subject's body into different local regions assigned to zones of an anatomical model; and
wherein the image data input is configured to provide standard time density curves for comparison.

8. Device according to one of the preceding claims, wherein additional image-based data is provided for the mask generation.

9. Device according to one of the preceding claims, wherein a display (18) is provided for displaying the macrovascular-related time density curve and the microvascular-related time density curve.

10. A system (100) for peripheral perfusion imaging, the system comprising:
- an X-ray imaging device (102);
- a display device (114); and
- a device (106) for peripheral perfusion time density curves according to one of the preceding claims;
wherein the X-ray imaging device is configured to provide perfusion angiographic X-ray images of a region of interest of a subject's body; and
wherein the display device is configured to display the macrovascular-related time density curve and the microvascular-related time density curve.

11. A method (200) for peripheral perfusion time density curves, the method comprising the following steps:
- receiving (202) a sequence of perfusion angiographic X-ray images of a region of interest of a subject's body;
- generating (204) a mask for non-body related background in the sequence of X-ray images and masking-out (206)the non-body related background in the perfusion angiographic X-ray images to achieve body related perfusion angiographic X-ray images;
- segmenting (208) vessels in at least one of the body related perfusion angiographic X-ray images;
- generating (210) at least one segmentation mask based on the segmented vessels;
- extracting (212) at least one macrovascular-related time density curve for image areas with segmented vessels based on the at least one segmentation mask; and extracting (214) at least one microvascular-related time density curve for non-segmented-vessel image areas of the body related perfusion angiographic X-ray images based on the at least one segmentation mask;
- providing (216) the at least one macrovascular-related time density curve and the at least one microvascular-related time density curve.

12. Method according to claim 11, wherein vessels are segmented in a plurality of the perfusion angiographic X-ray images;
wherein a segmentation mask sequence is generated based on the segmented vessels in the plurality of the perfusion angiographic X-ray images; and
wherein, for the extraction step (212), the macrovascular-related time density curve for masked image areas and the microvascular-related time density curve for non-masked image areas are extracted based on the segmentation mask sequence.

13. Method according to 11 or 12, wherein the segmentation step (208) comprises:
- segmenting (208a) at least first vessels in at least one of the perfusion angiographic X-ray images based on a predetermined first vessel criteria;
- segmenting (208b) at least second vessels in at least one of the perfusion angiographic X-ray images based on a predetermined second vessel criteria;
wherein the segmentation mask generation step (210) comprises:
- generating (210a) at least one first segmentation mask based on the segmented first vessels; and
- generating (210b) at least one second segmentation mask based on the segmented second vessels;
wherein the time-density curve extraction step (212) comprises:
- extracting (212a) a first macrovascular-related time density curve for masked image areas based on the at least one first segmentation mask; and
- extracting (212b) a second macrovascular-related time density curve for masked image areas based on the at least one second segmentation mask; and
wherein the providing step (216) comprises:
- providing (218) the first and the second macrovascular-related time density curve and the microvascular-related time density curve.

14. A computer program comprising computer readable code or instructions which when executed by a processor enable the processor to carry out the method of one of the claims 11 to 13.

15. A computer readable medium having stored the computer program of claim 14.
